# FASCICULE DE BREVET EUROPEEN

(11) **EP 2 700 916 B1**
(45) Date de publication et mention de la délivrance du brevet: **11.12.2019**
(21) Numéro de dépôt: 13177494.5
(22) Date de dépôt: 22.07.2013
(51) Int. Cl.: G01G 19/414, G06F 3/041

(54) **Appareil de pesee a interface tactile dynamique**
Waage mit dynamischem Touchinterface
Weighing device with dynamic touch interface

(30) Priorité: 22.08.2012 FR 1257926
(43) Date de publication de la demande: 26.02.2014
(73) Titulaire: SEB S.A., 69130 Ecully (FR)
(72) Inventeur: Caregnato, Stéphane, 74150 BLOYE (FR); Maziere, Hervé, 73340 LESCHERAINES (FR)
(74) Mandataire: Guéry-Jacques, Géraldine

(56) Documents cités:
- EP-A1- 0 852 329
- EP-A1- 1 538 428
- US-A1- 2002 036 618
- US-A1- 2009 057 035
- US-A1- 2012 122 430

## Description

La présente invention concerne un appareil électronique de pesée comprenant une interface dynamique tactile.

La commande à distance d'un appareil électroménager tel qu'un appareil électronique de pesée est connue du document FR2804519. Un terminal portable peut être agencé pour échanger des données de commande et de contrôle avec l'appareil électroménager.

Il est par ailleurs connu des documents EP1538428 et EP0852329 de réaliser la commande d'un appareil électronique de pesée en utilisant les capteurs de poids de celle-ci pour déduire d'une pression sur un plateau de pesée en une position donnée des instructions de commandes.

L'utilisation des dispositions décrites ci-dessus est toutefois limitée à la fois par les capacités de calcul des moyens de traitement embarqués dans l'appareil électronique de mesure qui rendent difficile la réalisation ou le traitement d'interactions complexes, et par la fragilité ou la sensibilité du terminal portable dans un environnement par exemple constitué par une cuisine dans lequel le terminal peut être endommagé ou sali.

L'expérience d'utilisation peut être insatisfaisante en ce qu'une confusion peut être engendrée par la commande de l'appareil électronique de pesée depuis deux interfaces différentes, à savoir celle du terminal portable et celle de l'appareil électronique de pesée. De même, des moyens d'affichages peuvent être présents à la fois sur l'appareil électronique de pesée et le terminal portable.

Par ailleurs, l'utilisation d'un terminal portable peut se révéler difficile, étant donné que l'utilisateur doit à la fois manipuler le terminal et procéder à des opérations manuelles relatives au pesage.

La présente invention a pour but de résoudre tout ou partie des inconvénients mentionnés ci-dessus.

A cet effet, la présente invention a pour objet un appareil électronique de pesée comprenant un plateau de réception d'une charge à peser, au moins un capteur de poids destiné à émettre au moins un signal représentatif de la charge appliquée sur le plateau de réception, et une interface utilisateur de commande destinée à recevoir des instructions d'un utilisateur, caractérisé en ce que l'interface utilisateur de commande (25) comprend une interface tactile (29) comprenant des moyens de reconnaissance de commandes tactiles (MRC) agencés pour déterminer au moins un déplacement d'un contact entre deux points sur la surface de l'interface tactile (29) afin de commander une fonction de l'appareil, et en ce que ledit au moins un capteur de poids (5) est destiné à émettre au moins un signal représentatif de la charge appliquée et d'une position d'application de la charge sur le plateau de réception (3), et en ce que les moyens de reconnaissance de commandes tactiles (MRC) sont capables de déterminer au moins le déplacement du contact entre les deux points sur la surface de l'interface tactile en fonction des données fournies par ledit au moins un capteur de poids (5).

Grâce aux dispositions selon l'invention, l'interface tactile « dynamique » reconnaissant le déplacement d'un appui tactile sur la surface permet de proposer un appareil de pesée ayant une utilisation plus efficace et plus réactive et/ou une précision et une sensibilité améliorées.

Selon un aspect de l'invention, ledit au moins un capteur de poids est destiné à émettre au moins un signal représentatif de la charge appliquée et d'une position d'application de la charge sur le plateau de réception, et les moyens de reconnaissance de commandes tactiles sont capables de déterminer au moins le déplacement du contact entre les deux points sur la surface de l'interface tactile en fonction des données fournies par ledit au moins un capteur de poids.

Grâce aux dispositions selon l'invention, les capteurs de poids permettent de réaliser une fonction autre que le calcul de poids de la charge : ils permettent de recevoir une commande tactile sur le plateau d'une fonction de l'appareil. De plus, l'encombrement et le coût sont réduits pour la réalisation d'une telle interface tactile dynamique. Ainsi le plateau est directement utilisé comme une interface tactile dynamique servant à commander ou régler au moins une fonction prédéterminée de la zone matérialisée autre que le calcul du poids.

Aussi le capteur de poids a une fonction double : la mesure de poids et la reconnaissance des commandes tactiles. Ces dispositions permettent d'éviter d'équiper l'appareil électronique de pesée de moyens de reconnaissance du contact de type électronique, et de fournir une solution robuste et simple de détection du contact.

Selon un aspect de l'invention, les moyens de reconnaissance de commandes tactiles comprennent :
- des moyens de reconnaissance d'un appui ponctuel sur la surface de l'interface tactile, et
- des moyens de reconnaissance d'un appui se déplaçant entre deux points de la surface de l'interface tactile.

Ainsi l'interface tactile présente une souplesse d'utilisation, puisque, contrairement à une interface utilisateur composée d'une pluralité de boutons, la localisation des commandes peut être modifiée et les instructions de commande de l'utilisateur peuvent être déduites des caractéristiques du mouvement d'une zone appui sur la surface de l'interface tactile.

Selon un aspect de l'invention, les moyens de reconnaissance de commandes tactiles de l'interface tactile sont agencés pour déterminer, en plus du déplacement, la position et/ou l'intensité du contact sur l'interface tactile en fonction des données fournies par ledit au moins un capteur de poids.

Ainsi le capteur de poids a une fonction multiple via la reconnaissance des commandes tactiles : il combine au moins deux informations, pour rendre l'interface plus ergonomique et plus rapide.

Selon un aspect de l'invention, l'interface tactile présente une surface substantiellement allongée pour définir une zone active de déplacement rectiligne d'un contact afin de commander la fonction proportionnellement au déplacement.

Ainsi l'utilisateur pourra faire varier une ou plusieurs fonctions par appui sur une réglette de façon ergonomique et simplifiée. Cette zone est agencée sur le plateau de réception lorsque le ou les capteurs servent à peser et à identifier la position de l'appui.

Selon un aspect de l'invention, l'interface tactile présente une surface permettant de définir une zone active de déplacement curviligne d'un contact afin de commander la fonction. Cette surface peut être sur le plateau de réception.

Ainsi l'utilisateur pourra faire varier une ou plusieurs fonctions par appui sur une surface en dessinant des symboles (lettres, chiffres...) ou en tournant autour d'une zone circulaire de façon très intuitive. Cette zone est agencée sur le plateau de réception lorsque le ou les capteurs servent à peser et à identifier la position de l'appui.

Selon un aspect de l'invention, l'appareil comprend des moyens de traitement de données pour déterminer la vitesse du déplacement de l'appui afin de commander la fonction proportionnellement à ladite vitesse.

Ainsi, simultanément au déplacement de l'appui, la vitesse de déplacement peut être prise en compte pour rendre l'interface encore plus réactive.

Selon l'invention, les moyens de reconnaissance de commandes tactiles de l'interface tactile sont agencés pour déterminer, en fonction des données fournies par ledit au moins un capteur de poids, le déplacement d'un contact sur l'interface tactile afin de commander une fonction et ensuite déterminer l'augmentation d'intensité du contact sur l'interface tactile de l'appui en fin de déplacement afin de valider ladite commande de fonction.

Ainsi le déplacement de l'appui est considéré en combinaison avec un appui final (ou initial) d'une intensité plus prononcée pour valider la fonction sans devoir valider sur un autre bouton ou une autre zone de l'interface. L'appareil gagne en réactivité de l'interface.

Selon un aspect de l'invention, l'appareil comprend des moyens de communication de données agencés pour transmettre à destination d'un terminal de communication portable des données de commande utilisateur fournies par l'interface utilisateur de commande, et des données de mesure déterminées en fonction du signal en provenance dudit au moins un capteur de poids, et pour recevoir des données de résultat et/ou de commande extérieures en provenance du terminal de communication portable.

Grâce aux dispositions selon l'invention, les moyens de communication de données permettent de déporter des fonctions de traitement de l'appareil électronique de pesée vers le terminal de communication portable. Ainsi, les moyens de traitement de données de l'appareil électronique de pesée peuvent être réduits au minimum et les fonctions de traitement plus complexes peuvent être réalisées par le terminal de communication portable, qui définit des données de commande dites extérieures en fonction des données de commande utilisateur recueillies par l'interface utilisateur de commande de l'appareil électronique de pesée.

Il est à noter que par terminal de communication portable, on entend notamment terminal de communication comprenant une interface utilisateur comprenant des moyens d'affichage, des moyens de traitement d'information, et des moyens de connexion à un réseau de communication public, notamment de type internet et/ou réseau de téléphonie mobile, et de préférence des moyens de communication sans fil.

Les données de commandes pouvant être reçues du terminal de communication portable peuvent par exemple consister en une demande de mesure, ou en une demande de réalisation d'un tarage.

Ainsi, l'interface utilisateur de l'appareil électronique de pesée agit comme une interface déportée du terminal de communication portable.

A titre d'exemple, les fonctions de traitement réalisées par le terminal portable de communication peuvent comprendre des tâches relatives à l'ordonnancement ou au suivi d'une recette spécifique, à l'adaptation de quantité d'ingrédient à un nombre de convives ou à une quantité disponible, ou des tâches de vérification sur les mesures effectuées pour assister l'utilisateur au pesage, en lui indiquant si la quantité pesée est supérieure ou inférieure à un seuil donné.

Selon un aspect de l'invention, l'appareil électronique de pesée comprend un logement situé dans une zone d'action des moyens de communication de données de l'appareil électronique de pesée.

Le logement joue un rôle de protection pour le terminal de communication portable. En effet, le terminal n'est pas en contact direct avec le milieu extérieur de façon à éviter les dommages occasionnés par l'environnement. En particulier, si l'appareil de pesée est utilisé en tant que balance de cuisine, le terminal est protégé des éclaboussures ou des tâches ou des traces dues à un contact tactile. Le terminal est également protégé contre une chute d'objet ou contre une chute de l'appareil de pesée sur le sol.

Selon une première possibilité, les moyens de communication de l'appareil électronique de pesée peuvent être filaires. Dans ce cas, une connexion physique, par exemple par une connexion de type Jack, peut être réalisé avec le terminal de communication portable, notamment par une prise présente dans le logement, l'espace accessible dans lequel la prise peut être connectée constituant la zone d'action.

Selon une seconde possibilité, les moyens de communication de l'appareil électronique de pesée de données peuvent être sans fil, par exemple de type infrarouge, Bluetooth®, radiofréquence, ou communication en champ proche (NFC). Ainsi, les moyens de communication peuvent recevoir et envoyer des données jusqu'à une distance maximale : tout point situé à une distance inférieure des moyens de communication est compris dans la zone d'action.

Selon un aspect de l'invention, l'appareil électronique de pesée comprend un dispositif de fixation destiné à la réception d'un terminal de communication portable, le dispositif étant mobile entre une première position insérée à l'intérieur du logement et une seconde position extérieure au logement. Selon un aspect de l'invention, le dispositif de fixation est amovible.

Selon un aspect de l'invention, le dispositif de fixation comporte un support de réception d'un terminal de communication et une couverture translucide ou transparente destinée à être adaptée sur le terminal et sur le support.

Ainsi l'appareil électronique de pesée et le terminal de communication portable peuvent être solidarisés, en particulier de façon à maintenir le terminal de communication à une position déterminée par rapport à l'appareil électronique de pesée.

Le dispositif de fixation permet toutefois de désolidariser le terminal facilement en cas de besoin.

Selon des variantes de l'invention, il est possible de désolidariser le terminal de communication et le dispositif de fixation sans interrompre le fonctionnement de l'appareil électronique de pesée et l'interaction entre le terminal de communication et l'appareil électronique de pesée pour autant que le terminal reste dans la zone d'action des moyens de communication de données.

Selon un aspect de l'invention une paroi transparente ou translucide délimite une séparation entre le logement et l'extérieur, la paroi transparente étant agencée de façon à être disposée en regard de l'écran d'un terminal de communication portable inséré dans le logement.

Ainsi la paroi transparente protège l'écran du terminal de communication portable du milieu extérieur. De plus la paroi transparente rend visible l'écran du terminal depuis l'extérieur lorsque le terminal est inséré dans le logement de l'appareil électronique de pesée.

Selon un aspect de l'invention, une portion de la paroi transparente est comprise dans l'interface tactile de l'appareil de pesée.

Grâce à ces dispositions, le signal des capteurs de poids de l'interface tactile peut être interprété par les moyens de traitement du terminal ou des moyens de traitement de l'appareil de pesée électronique comme une information de position et ou de mouvement sur l'écran du terminal de communication mobile disposé en regard de la paroi transparente et ainsi permettre une utilisation du terminal de communication mobile similaire à celle effectué grâce à une interaction tactile avec l'interface de ce terminal, notamment grâce à l'écran tactile de celui-ci, tout en permettant une protection du terminal.

Selon un aspect de l'invention, l'appareil électronique de pesée comprend des moyens de traitement des données. Les moyens de traitement des données de l'appareil électronique de pesée sont réduits à leur minimum et sont destinés notamment à préparer et transmettre les données de commande au terminal ou à interpréter les données de commande en provenance du terminal de communication.

La présente invention concerne également un ensemble de pesage comprenant :
- l'appareil électronique de pesée,
- un terminal de communication portable :
   ∘ comprenant des moyens de communication compatibles avec les moyens de communication de l'appareil électronique de pesée,
   ∘ étant situé dans la zone d'action des moyens de communication de données de l'appareil électronique de pesée,
   ∘ comprenant des moyens de traitement des données agencés pour :
      ▪ recevoir et enregistrer les données en provenance de l'appareil électronique de pesée,
      ▪ transmettre des données de commande extérieure à destination de l'appareil électronique de pesée,
   ∘ comprenant une interface utilisateur, comportant un écran
   ∘ comprenant une application exécutable agencée pour afficher sur un écran du terminal les données connues des moyens de traitement du terminal

Selon un aspect de l'invention, Les moyens de traitement des données du terminal peuvent recevoir d'une part des données de commande en provenance de l'appareil électronique de pesée et d'autre part des commandes directes en provenance du terminal.

Les moyens de traitement de données du terminal sont agencés pour traiter simultanément les deux : il s'agit d'un système à double commande.

Lorsque le terminal est dans le logement de l'appareil électronique de pesée, l'utilisateur saisit les données de commande sur l'interface utilisateur de l'appareil électronique de pesée.

Lorsque le terminal est en dehors de l'appareil électronique de pesée et dans la zone d'action des moyens de communication sans fil, l'utilisateur saisit des commandes directes sur l'interface utilisateur du terminal.

Les traitements des données par le terminal peuvent être similaires que l'utilisateur choisisse l'interface de l'appareil de pesée ou l'interface du terminal.

La présente invention a également pour objet un procédé de contrôle et/ou de commande d'un appareil électronique de pesée comprenant un plateau de réception d'une charge à peser, au moins un capteur de poids destiné à émettre un signal représentatif de la charge appliquée et d'une position d'application de la charge sur le plateau de réception, et une interface utilisateur de commande destinée à recevoir des instructions d'un utilisateur et comprenant une interface tactile formée au moins partiellement sur le plateau,

Comprenant les étapes suivantes :
- recevoir des données de commande utilisateur (DC) par l'intermédiaire de l'interface tactile de l'appareil électronique de pesée issues d'un déplacement d'un contact entre deux points sur la surface de l'interface tactile ;
- transmettre à destination d'une unité de commande (CPU) les données de commande (DC) utilisateur, et des données de mesure (DM) déterminées en fonction du signal en provenance dudit au moins un capteur de poids,
- émettre des données de résultat et/ou de commande (DC) en provenance de l'unité de commande (CPU).

Selon un aspect de l'invention, on détermine les données de commande utilisateur (DC) à partir d'au moins un appui sur une surface d'une interface tactile de l'appareil électronique de pesée ; on convertit au moins une position de l'appui sur la surface tactile de l'appareil de pesée en une position correspondante d'un écran tactile d'un terminal de communication portable disposé dans un logement de l'appareil de pesée, l'écran tactile étant en regard de la surface de l'interface tactile.

Selon un aspect de l'invention, on définit les contours d'une zone active par l'intermédiaire de l'interface tactile de l'appareil de pesée, la zone active étant définie comme une portion de la surface de l'interface tactile, de préférence transparente ou translucide, étant en regard de la surface de l'écran du terminal.

Lorsque l'appareil de pesée est destiné à travailler avec un terminal de communication portable, la présente invention a alternativement pour objet un procédé de contrôle et/ou de commande d'un appareil électronique de pesée comprenant un plateau de réception d'une charge à peser, au moins un capteur de poids destiné à émettre un signal représentatif de la charge appliquée et d'une position d'application de la charge sur le plateau de réception, et une interface utilisateur de commande destinée à recevoir des instructions d'un utilisateur, comprenant les étapes suivantes :
- recevoir des données de commande utilisateur par l'intermédiaire de l'interface utilisateur de l'appareil électronique de pesée ;
- transmettre à destination d'un terminal de communication portable les données de commande utilisateur, et des données de mesure déterminées en fonction du signal en provenance du capteur de poids,
- recevoir des données de résultat et/ou de commande extérieures de l'appareil électronique de pesée en provenance du terminal de communication portable.

Selon un aspect de l'invention, on détermine les données de commande utilisateur à partir d'au moins un appui sur une surface d'une interface tactile de l'appareil électronique de pesée ; et on convertit au moins une position de l'appui sur la surface tactile de l'appareil de pesée en une position correspondante d'un écran tactile d'un terminal de communication portable disposé dans un logement de l'appareil de pesée, l'écran tactile étant en regard de la surface d'une interface tactile.

Grâce à ces dispositions, l'utilisateur a l'impression de saisir ses instructions directement sur l'écran du terminal grâce à la paroi transparente.

Selon un aspect de l'invention, on définit les contours d'une zone active par l'intermédiaire de l'interface tactile de l'appareil de pesée, la zone active étant définie comme une portion de la surface de l'interface tactile, de préférence transparente ou translucide, étant en regard de la surface de l'écran du terminal.

Lorsque l'appareil de pesée est destiné à travailler avec un terminal de communication portable, la présente invention concerne également un procédé de contrôle et/ou de commande d'un appareil électronique de pesée par un terminal de communication portable, comprenant les étapes suivantes :
- recevoir, de l'appareil électronique de pesée, des données de commande utilisateur, et des données de mesure de poids,
- déterminer des données de résultat et/ou de commande extérieures de l'appareil électronique de pesée à partir des données de commande utilisateur, et des données de mesure ;
- transmettre les données de résultat et/ou de commande extérieures à l'appareil électronique de pesée.

Selon un aspect de l'invention, les données de commande utilisateur comprennent des données des positions d'au moins un appui sur une surface de l'appareil de pesée, et dans lequel on convertit l'au moins une position d'appui sur la surface en une position correspondante d'un écran tactile d'un terminal de communication portable.

Selon un aspect de l'invention, on réalise une correspondance entre une zone active de la surface de l'appareil de pesée et l'écran tactile du terminal de communication en définissant au moins un point de référence de la zone active.

La présente invention concerne également un produit programme d'ordinateur comprenant des instructions de code agencées pour mettre en œuvre les étapes du procédé. Selon un aspect de l'invention, le produit programme d'ordinateur est agencé sous forme d'application téléchargeable sur un terminal mobile de communication.

Toujours lorsque l'appareil de pesée est destiné à travailler avec un terminal de communication portable la présente invention concerne également un terminal mobile de communication comprenant en mémoire les instructions de code du produit programme d'ordinateur et est agencé pour exécuter un tel produit programme d'ordinateur.

Enfin, la présente invention concerne également un support de données comprenant les instructions de code du produit programme d'ordinateur.

De toute façon, l'invention sera bien comprise à l'aide de la description qui suit, en référence aux figures annexées représentant, à titre d'exemple non limitatif, un appareil électronique de pesée selon l'invention.
Figure 1 est une vue en perspective d'un ensemble de pesage comprenant un appareil électronique de pesée et un terminal de communication portable, le terminal étant compris dans un logement de l'appareil électronique de pesée.
Figure 2a est une vue en perspective d'un ensemble de pesage comprenant l'appareil électronique de pesée et le terminal de communication portable, le terminal étant en dehors de l'appareil électronique de pesée.
Figure 2b est une vue d'une variante de l'ensemble de pesage dans lequel le logement de l'appareil électronique débouche sur une face latérale de l'appareil.
Figure 3a est un schéma fonctionnel de l'ensemble de pesage selon un premier mode.
Figure 3b est un schéma fonctionnel de l'ensemble de pesage selon un deuxième mode
Figure 4 est une vue en coupe de l'appareil électronique de pesée.
Figure 5 est un détail d'une vue en perspective de l'ensemble de pesage laissant apparaitre l'interface tactile de l'appareil électronique de pesée et l'écran du terminal de communication portable.
Figure 6 et 7 sont des vues de dessus de l'ensemble de pesage.
Figure 8 est une vue en perspective de la partie supérieure de l'ensemble de pesage.
Figure 9 est une vue de dessus en perspective de l'ensemble de pesage.
Figure 10 est une vue de dessous en perspective de l'ensemble de pesage.
Figures 11 à 13 sont des vues en perspective d'un dispositif de fixation du terminal de communication portable.
Figures 14 et 15 sont des vues de côté du dispositif de fixation du terminal de communication portable.
Figure 16 est une vue en coupe longitudinale du dispositif de fixation du terminal de communication portable.
Figure 17 est une vue de détail de dessus de l'ensemble de pesage laissant apparaitre le dispositif de fixation.
Figure 18 est une illustration graphique d'une fonction de réglage ergonomique.de l'appareil électronique de pesée.

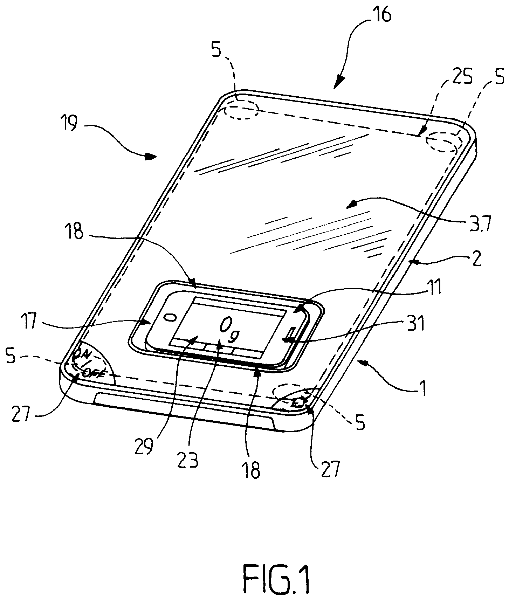

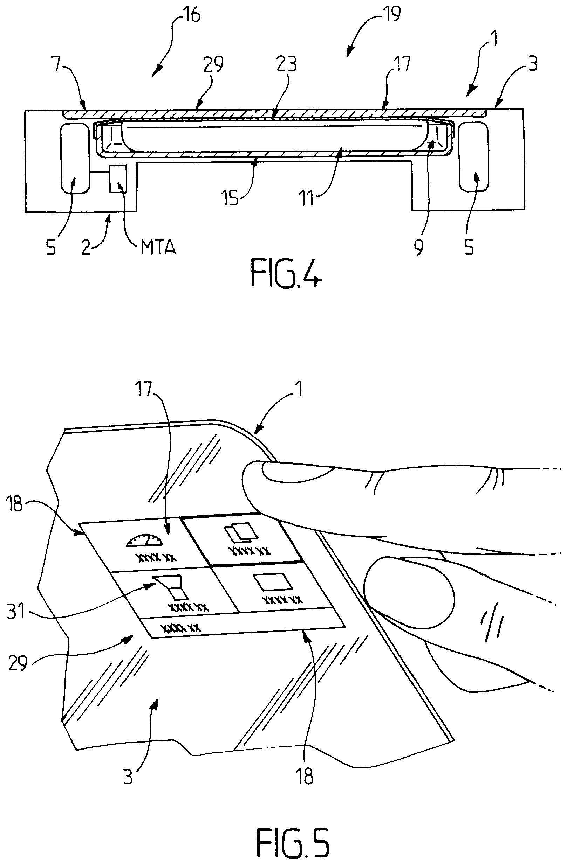

Comme illustré à la figure 1 et à la figure 4, un appareil électronique de pesée 1 comprend un socle 2 et un plateau de réception 3. Dans le mode représenté, quatre capteurs de poids 5 sont situés sous la surface du plateau de réception 3 qui correspond à une surface supérieure 7 de l'appareil électronique de pesée 1.

L'appareil électronique de pesée 1 comprend également une interface utilisateur de commande 25. Au moins une partie de l'interface utilisateur de commande 25 est située sur le plateau de réception 3 et schématisée dans un exemple par un rectangle en pointillés sur les figures 1, 2, 6.

Comme illustré sur les figures 1,2, 6, 7 et 8, l'interface utilisateur de commande 25 peut comprendre des boutons 27, par exemple des boutons poussoirs, et une interface tactile 29.

Dans le mode illustré en figure 1 concernant un appareil de pesée selon le mode de l'invention contenant des moyens de traitement de données MTT dans un terminal de communication portable 11, l'interface utilisateur de commande 25 (schématisée en pointillés) contient une interface tactile 29 qui correspond à la paroi transparente 17 en regard de l'écran du terminal portable. L'interface utilisateur de commande 25 peut additionnellement contenir une interface tactile autre que la paroi transparente 17, et fonctionnant avec les capteurs de poids qui sont capables de déterminer l'emplacement, le déplacement, l'intensité, la vitesse de déplacement des appuis sur la zone interface 25 du plateau 3. L'interface utilisateur de commande 25 pourrait aussi contenir une interface tactile capacitive par exemple, ne fonctionnant pas avec les capteurs de poids.

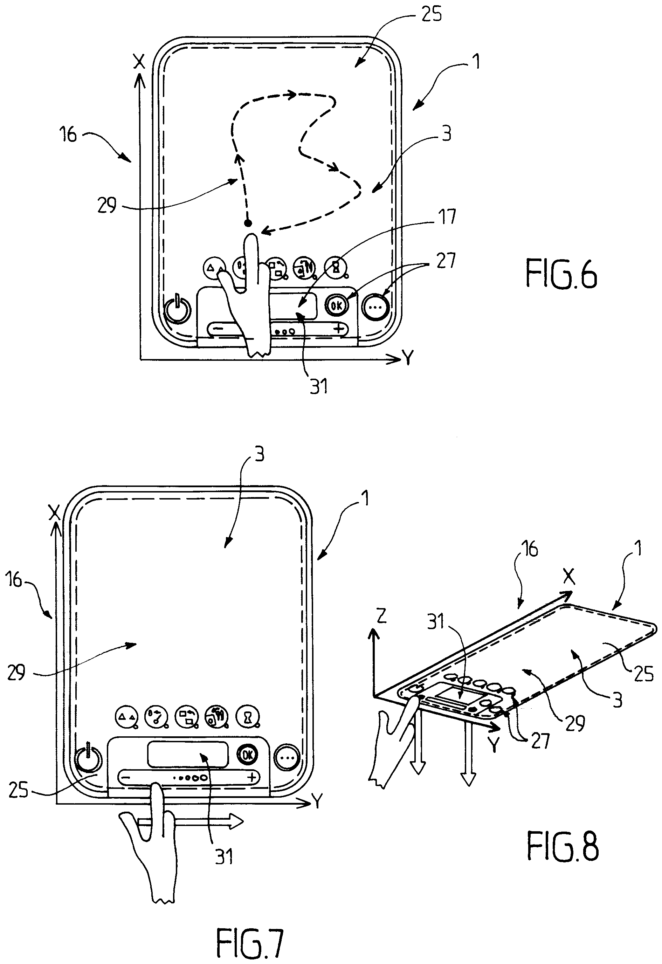

Dans le mode illustré en figures 6, 7, 8 concernant un appareil de pesée selon le mode de l'invention contenant une unité de commande et de contrôle (CPU) intégrée à demeure dans l'appareil, l'interface utilisateur de commande 25 (schématisée en pointillés) peut définir une interface tactile 29 entièrement tactile sans boutons poussoir à contact.

Cette interface tactile 29 peut contenir une première zone pour reconnaitre les appuis en mouvement, leur emplacement voire aussi leur intensité et/ou leur vitesse. Cette première zone est définie par la majeure partie supérieure du plateau reconnaissant par exemple des lettres dessinées par l'utilisateur comme illustré et par le « slider » horizontal en bas du plateau pour régler une valeur de commande par exemple par un coulissement rectiligne et continu de l'appui sur la surface.

Cette interface tactile 29 peut contenir une deuxième zone, séparée de la première zone, permettant de reconnaitre un appui statique seulement. Cette deuxième zone est par exemple définie par les cinq boutons de réglage de fonction alignés horizontalement (chronomètre, règle de trois, convertisseur pesée solide-liquide, pesée inversée, passage de la pesée liquide à la pesée solide...) ou encore par un bouton interrupteur M/A, un bouton de tarage, un bouton OK de validation.

L'appareil de pesée à interface tactile uniquement statique est décrit dans le brevet de la demanderesse EP0852329 incorporé ici à titre de référence. L'interface tactile au moins partiellement dynamique selon la présente invention nécessite un processeur plus puissant que pour l'interface tactile uniquement statique. Néanmoins l'utilisateur gagne en vitesse d'usage, en vitesse de commande, en ergonomie, en nombre de commandes de paramètres comme décrit plus après.

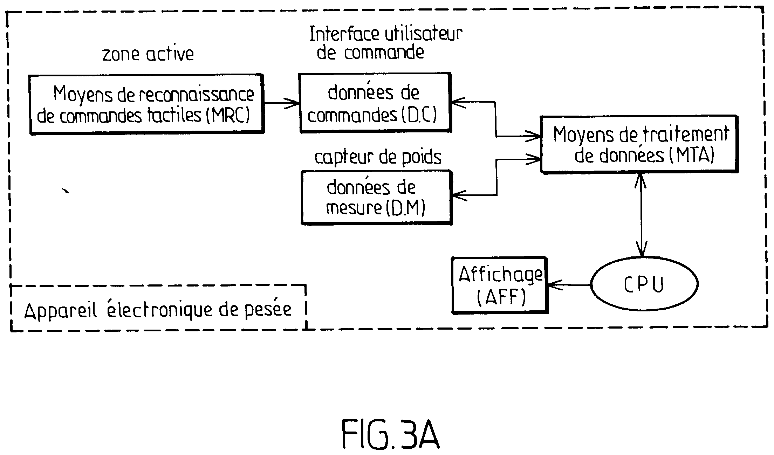

Comme illustré dans le schéma fonctionnel de la figure 3A, l'appareil électronique de pesée 1 est pourvu de moyens de contrôle et de commande de données (CPU) agencés pour recevoir des données de mesure DM sur la charge appliquée voire aussi sur la position d'application de la charge sur le plateau 3 par le ou les capteurs de poids et pour recevoir ou émettre des données de commande DC de l'interface.

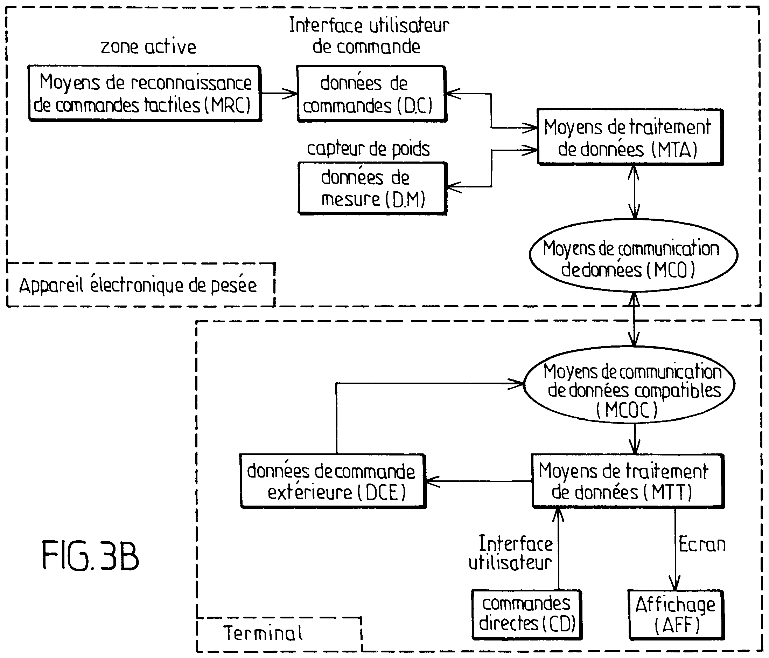

Comme illustré dans le schéma fonctionnel de la figure 3B alternative à 3A, l'appareil électronique de pesée 1 est alternativement pourvu de moyens de communication de données MCO agencés pour recevoir des données provenant de l'extérieur. Il peut s'agir à titre d'exemple de moyens de communication de données sans fil, selon l'un quelconque des protocoles d'échange sans fil existants, comme la transmission par radiofréquence, infrarouge, communication en champ proche (NFC) ou Bluetooth.

Le terminal de communication portable 11 comprend une interface utilisateur 21 comprenant par exemple un bouton-poussoir et un écran, en particulier un écran tactile 23. Le terminal 11 comprend des moyens de communication de données MCO agencés pour transférer les données de commande DC à des moyens de traitement MTT du terminal 11. Pour ce faire, le terminal 11 comprend des moyens de communication de données complémentaires MCOC. Les moyens de traitement de données MTT du terminal 11 sont agencés pour recevoir et analyser les données de commande utilisateur DC. Les moyens de traitement des données MTT élaborent des données de commande extérieure DCE destinées à être envoyées vers l'appareil électronique de pesée 1. A cet effet, le terminal 11 comprend des moyens de communication de données compatibles MCOC avec les moyens de communication de données MCO de l'appareil électronique de pesée 11.

Les données de commande extérieure DCE sont transmises aux moyens de traitement des données MTA de l'appareil électronique de pesée 1 par l'intermédiaire des moyens de communication MCO.

Les données de commande extérieure DCE sont notamment des requêtes d'acquisition de données de mesure DM ou des requêtes de réalisation d'opérations comme un tarage ou un changement d'unités par exemple. Les moyens de traitement de données MTA sont agencés pour recevoir les données de mesure DM en provenance du capteur de poids 5 en fonction des données de commande extérieure DCE.

Les données de mesure DM sont des signaux représentatifs de la charge appliquée sur le plateau de réception 3. Les données de mesure DM comprennent également des données sur la position d'application de la charge sur le plateau 3.

Les moyens de communication de données MCO transmettent ensuite les données de mesure DM aux moyens de traitement de données du terminal MTT.

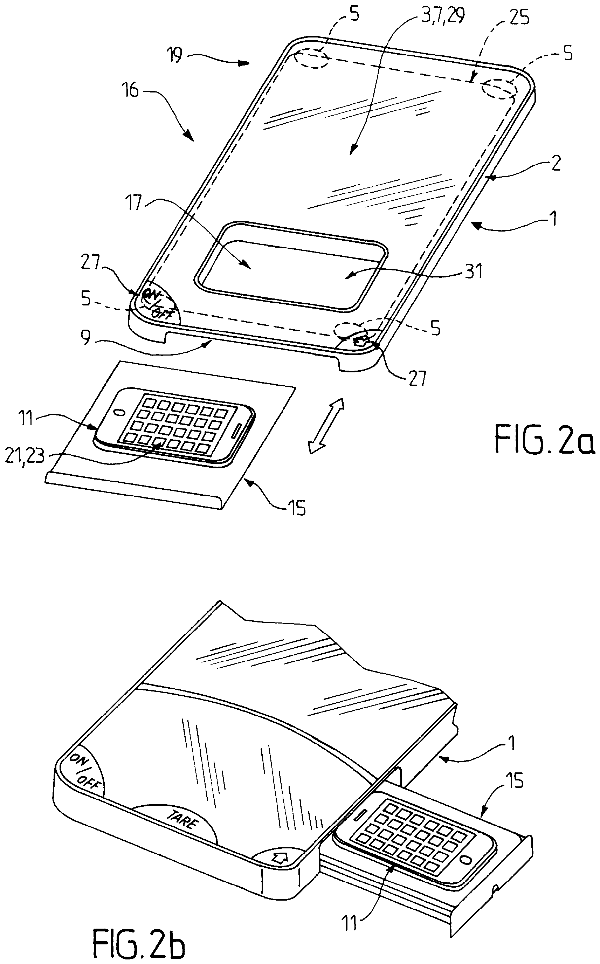

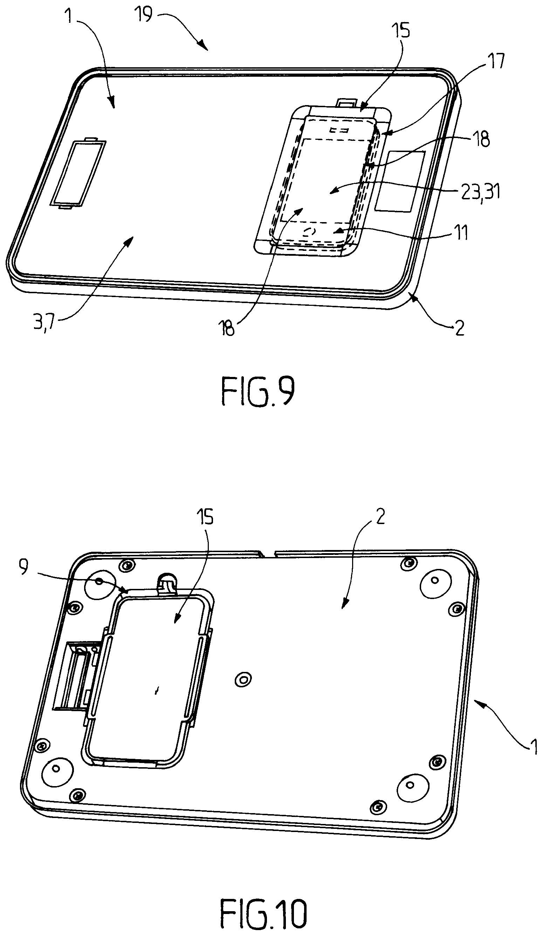

Comme illustré notamment aux figures 2, 4, 9, 10, et 17, l'appareil électronique de pesée 1 comprend un logement 9 destiné à recevoir un terminal de communication portable 11. Le terminal de communication portable 11 est solidarisé à l'appareil électronique de pesée 1 par un dispositif de fixation 15. L'appareil électronique de pesée 1 et le terminal de communication portable 11 constituent un ensemble de pesage 16.

Le dispositif de fixation 15 présente des moyens d'adaptation à des terminaux de communication portable 11 de différentes dimensions. Ainsi la plupart des terminaux portables 11 du marché sont adaptables sur un modèle unique de dispositif de fixation 15.

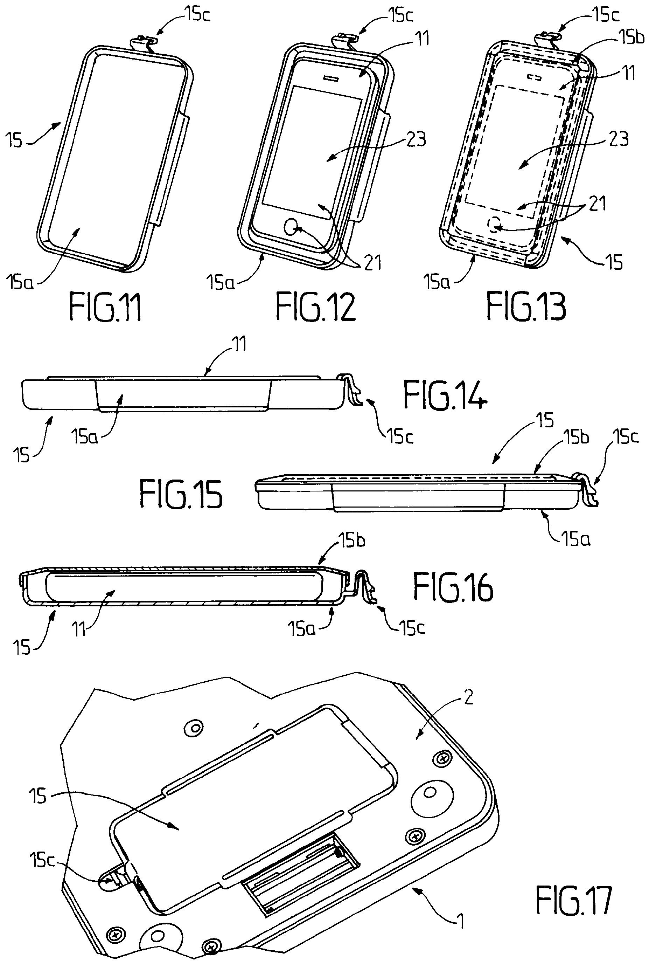

Comme illustré aux figures 11 à 16, selon un mode de réalisation, le dispositif de fixation 15 comporte un support 15a et une couverture translucide ou transparente 15b destinée à être adaptée sur le terminal et sur le support 15a. La couverture transparente 15b est chaussée sur le support 15a afin de maintenir en position le terminal de communication portable 11 à l'intérieur du support 15a. Cette couverture peut notamment être réalisée en silicone.

La conception du support 15a est telle que le terminal de communication portable 11 est légèrement affleurant de manière à faire adhérer la couverture transparente 15b à la surface du terminal de communication portable 11.

Comme illustré à la figure 17, une fois assemblé, le dispositif de fixation 15 peut être placé sous la balance et fixé par des moyens de blocage comprenant par exemple un clip plastique 15c, coopérant avec des moyens de clippage complémentaires de l'appareil de pesée.

Le logement 9 est partiellement délimité par une paroi transparente 17 qui constitue une portion du plateau de réception 3.

Lorsque le terminal de communication portable 11 est compris dans le logement 9, comme illustré à la figure 5, l'écran 23 du terminal 11 est situé en regard de la paroi transparente 17 de telle sorte que l'écran 23 soit visible depuis l'extérieur 19. L'écran tactile ne joue plus que le rôle d'écran, sa fonction de reconnaissance tactile étant annihilée par la paroi transparente 17.

Il est à noter que l'utilisation d'un dispositif de fixation 15 intermédiaire permet une adaptation à différents types de terminaux de communication portables 11, dans la mesure où la taille des terminaux 11 reste comprise dans une limite définie par les dimensions du support 15b. A cet effet, différents types de couvertures transparentes 15b peuvent être utilisées pour s'adapter à la fois à différents modèles de terminaux de communication portable 11 et au support 15a.

Selon une variante de réalisation, l'appareil électronique de pesée 1 comprend un dispositif d'alimentation électrique d'une batterie du terminal de communication portable 11. Le dispositif d'alimentation peut être avec ou sans fil.

Il est à noter que le logement 9 peut être positionné selon un mode de réalisation illustré sur la figure 2a de façon à déboucher sur une face avant de l'appareil ou selon un mode de réalisation illustré sur la figure 2b de façon à déboucher sur une face latérale de l'appareil.

Selon une possibilité de réalisation représentée sur la figure 2b, le dispositif de support 15a est réalisé sous forme d'une trappe qui n'est pas amovible mais montée coulissante entre une position ouverte, représentée sur la figure 2b et une position fermée.

Selon des variantes de réalisation, le terminal de communication portable peut être rentré directement dans le logement de l'appareil de pesée, sans utilisation d'un dispositif de support.

Comme illustré à la figure 3, le fonctionnement de l'ensemble de pesage 16 requiert un échange d'informations entre l'appareil électronique de pesée 1 et le terminal de communication portable 11.

Selon un premier mode de fonctionnement, le terminal de communication portable 11 est compris dans le logement 9 de l'appareil électronique de pesée 1, comme illustré figures 1 et 4 à 9. Les dimensions du terminal peuvent être variables selon le constructeur. L'interface utilisateur 21 du terminal 11 n'est pas accessible. Toutefois l'écran 23 du terminal 11 est visible à travers la paroi transparente 17.

La paroi transparente 17 constitue une partie de l'interface tactile 29. De plus, on définit une zone active 31 comme la partie de l'interface tactile 29 de la paroi transparente 17 en regard de l'écran 23. Autrement dit, les contours de la zone active 31 correspondent aux contours de l'écran 23 du terminal 11.

Des moyens de reconnaissance par contact MRC sont agencés pour détecter l'emplacement des contacts sur la zone active 31 par rapport aux contours de l'écran 23 en regard.

Les données de commande DC acquises par la zone active 31 sont ensuite transmises au moyens de traitement de données MTA de l'appareil de pesée 1 puis aux moyens de traitement de données MTT du terminal 11.

Les moyens de traitement MTT réalisent une conversion de l'emplacement des contacts sur la surface tactile de l'appareil de pesée en une position correspondante d'un écran tactile du terminal de communication.

Ainsi, les moyens de traitement MTT peuvent déterminer des données de résultat et/ou de commande extérieures DCE de l'appareil électronique de pesée à partir des données de commande DC utilisateur, et des données de mesure DM en considérant les instructions de l'utilisateur comme si celui-ci avait directement accès à l'écran tactile du dispositif de communication portable, et remettre à jour de façon correspondante l'affichage de l'écran.

Comme illustré par les figures 1, 4 et 9, le terminal de communication portable 11 est protégé par rapport au milieu extérieur.

Selon un second mode de fonctionnement, illustré à la figure 2, le terminal de communication portable 11 est hors de l'appareil électronique de pesée mais toujours situé dans une zone d'action des moyens de communication MCO.

Le terminal de communication portable 11 comprend une interface utilisateur 21 et un écran 23. Ainsi, l'utilisateur peut saisir des commandes directes CD sur l'interface utilisateur 21 pour envoyer un ordre à l'appareil électronique de pesée 1.

Les moyens de traitement des données MTT du terminal 11 reçoivent et analysent les commandes directes CD. Cette opération est identique à celle réalisée selon le premier mode de fonctionnement, les données de commande DC en provenance de l'appareil électronique de pesée 1 étant remplacées par les commandes directes CD en provenance du terminal 11.

Le reste du processus de fonctionnement du second mode est identique à celui du premier mode. L'élaboration des données de commande extérieure DCE et la requête d'une donnée de mesure DM par le capteur de poids 5 sont réalisées de la même manière.

Le passage du premier au deuxième mode ne gêne en rien le fonctionnement de l'ensemble de pesage. Il en est de même pour le passage du second au premier mode.

Au contraire, l'utilisateur peut sortir le terminal de communication portable 11 du logement 9 de l'appareil électronique de pesée 1 pour recevoir un appel, par exemple, et le remettre en place dans l'appareil électronique de pesée après.

Comme plusieurs types terminaux de communication portables 11 de taille d'écran variable sont adaptables au dispositif de fixation 15, il est nécessaire de calibrer la zone active 31 pour qu'il y ait une correspondance entre l'affichage AFF et les commandes entrées par l'utilisateur sur la zone active dans le premier mode de fonctionnement décrit ci-dessus.

Ainsi les moyens de traitement de données MTA sont agencés pour définir, en utilisant les moyens de reconnaissance de commandes tactiles MRC, l'emplacement et les dimensions de la zone active 31 sur la paroi transparente 17. La définition de l'emplacement et des dimensions de la zone active 31.

Le calibrage peut être réalisé en demandant à l'utilisateur de procéder à deux appuis sur la paroi transparente 17 définissant deux coins opposés 18 d'une surface rectangulaire de la zone active 31. Cette surface rectangulaire correspond à la surface de l'écran 23 du terminal 11. L'utilisateur peut faire deux appuis successifs et séparés représentant les deux points référence ou bien l'utilisateur peut coulisser le doigt continument entre les deux points référence. Ainsi un rectangle est défini. Le calibrage peut se faire par trois appuis pour définir des zones quadrilatères plus complexes du type polygones. Pour une plus grande précision de calibrage, il peut être utile d'appuyer avec un objet pointu de type stylo ou couteau.

Des moyens de traitement de données MTA sont agencés pour prendre en compte la durée et la force exercée sur la surface de la zone active 31 par un appui.

Les moyens de traitement de données MTA sont également agencés pour traiter des appuis d'intensités variables conjugués à des déplacements sur la zone active 31. Un algorithme de reconnaissance compris dans les moyens de traitement de données MTA permet notamment d'identifier des déplacements non rectilignes. Un autre algorithme de reconnaissance compris dans les moyens de traitement de données MTA permet de déterminer la vitesse d'un déplacement d'un appui, rectiligne par exemple. Un autre algorithme de reconnaissance compris dans les moyens de traitement de données MTA permet de déterminer la vitesse d'un appui conjugué à un déplacement.

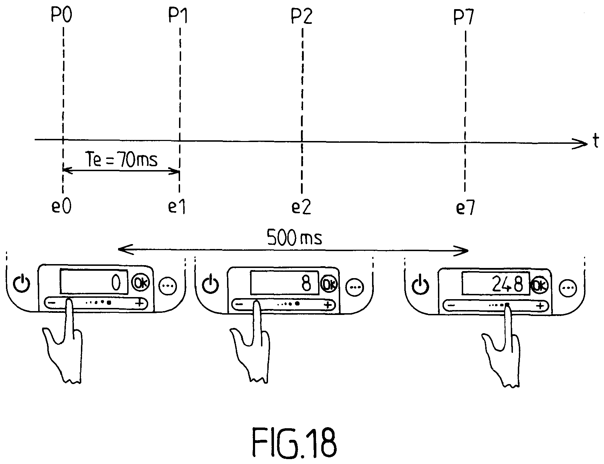

L'utilisateur peut notamment régler une valeur d'une commande, comme illustré aux figures 7 et 18 par le déplacement rectiligne d'un appui. L'algorithme de reconnaissance dédié calcule la vitesse de déplacement de l'appui en réalisant deux déterminations de position à un intervalle de temps connu.

La figure 18 représente, selon une échelle de temps t, plusieurs mesures de détermination de position, et l'affichage correspondant sur l'appareil de mesure. L'intervalle est dans cet exemple, de 70 ms entre chaque détermination de position e0, e1, e2, ...e7 etc.

L'évolution de la variation est proportionnelle à la vitesse de l'appui. Si le déplacement est rapide, l'augmentation ou la diminution de la valeur sera importante. Inversement si le déplacement est lent, la variation sera faible.

Comme illustré à la figure 18, un coefficient multiplicateur est appliqué au déplacement en fonction de la vitesse de l'appui pour déterminer la variation à appliquer au réglage de la valeur.

Lorsqu'un appui est détecté à l'instant e0 à la position P0 et 70 ms plus tard à l'instant e1 à la position P1, les moyens de traitement de l'appareil de mesure MTA en association avec les moyens de traitement du terminal MTT déterminent la distance P0P1. La valeur de la distance P0P1 étant comprise dans un premier intervalle de valeurs, aucun coefficient multiplicateur n'est appliqué. L'augmentation de la valeur réglée sera proportionnelle à la distance P0P1.

Pour une détection d'un appui entre deux positions P1 et P2, et entre deux instants e1 et e2 séparés de 70 ms, la distance parcourue P1P2 est supérieure à la distance P0P1. La distance P1P2 étant comprise dans un second intervalle de valeurs, un coefficient multiplicateur de 2 est appliqué. L'augmentation de la valeur réglée sera proportionnelle au double la distance P1P2.

De même pour un appui entre deux positions P6 et P7 et entre deux instants e6 et e7 séparés de 70 ms, la distance parcourue est supérieure à la distance P1P2. La distance P6P7 étant comprise dans un troisième intervalle de valeurs, un coefficient multiplicateur de 4 est appliqué. L'augmentation de la valeur réglée sera proportionnelle à quatre fois la distance P6P7.

Cette disposition présente un avantage pour un réglage précis d'une valeur.

Grâce aux dispositions selon l'invention, l'utilisateur a accès à des fonctions étendues malgré la simplicité des moyens de traitement de données MTA de l'appareil électronique de pesée 1.

Quelques applications des variantes de l'invention sont présentées ci-dessous.

Pour la réalisation d'une recette, les moyens de traitement de données MTT du terminal 11 peuvent mémoriser des paramètres comme nombre de personnes ou le poids d'un aliment.

Une fonction appelée règle de trois permet d'adapter une recette aux nombre de portions ou par rapport à la quantité d'aliments disponible. Un poids d'un aliment peut également être calculé en fonction d'une quantité maximale de calories à ne pas dépasser.

Le moyens de traitement de données MTT du terminal 11 proposent également une fonction de pesée croissante ou décroissante. Cette fonction est utilisée pour obtenir une quantité souhaitée d'un aliment liquide ou en poudre. Si la quantité pesée est inférieure ou supérieure à la quantité souhaitée l'ensemble de pesage émet un son ou un signal visuel pour que l'utilisateur adapte la quantité. Un son ou signal visuel différent est émis lorsque le poids souhaité est atteint.

D'autres fonctions sont également comprises dans les moyens de traitement de données MTT du terminal 11, comme la conversion d'unités de mesure ou la fonction minuteur.

Les moyens de traitement MTT du terminal 11 de communication portable ont des capacités de mémorisation importantes par rapport à un appareil électronique de pesée n'échangeant pas de données avec un terminal de communication portable 1.

## Revendications

1. Appareil électronique de pesée (1) comprenant :
- un plateau de réception (3) d'une charge à peser,
- au moins un capteur de poids (5) destiné à émettre au moins un signal représentatif de la charge appliquée sur le plateau de réception (3), et
- une interface utilisateur de commande (25) destinée à recevoir des instructions d'un utilisateur,
**caractérisé en ce que**
l'interface utilisateur de commande (25) comprend une interface tactile (29) comprenant des moyens de reconnaissance de commandes tactiles (MRC) agencés pour déterminer au moins un déplacement d'un contact entre deux points sur la surface de l'interface tactile (29) afin de commander une fonction de l'appareil, et **en ce que** ledit au moins un capteur de poids (5) est destiné à émettre au moins un signal représentatif de la charge appliquée et d'une position d'application de la charge sur le plateau de réception (3), et **en ce que** les moyens de reconnaissance de commandes tactiles (MRC) sont capables de déterminer au moins le déplacement du contact entre les deux points sur la surface de l'interface tactile en fonction des données fournies par ledit au moins un capteur de poids (5).

2. Appareil électronique de pesée (1) selon la revendication 1 dans lequel les moyens de reconnaissance de commandes tactiles (MRC) comprennent :
- des moyens de reconnaissance d'un appui ponctuel sur la surface de l'interface tactile (29), et
- des moyens de reconnaissance d'un appui se déplaçant entre deux points de la surface de l'interface tactile (29).

3. Appareil électronique de pesée (1) selon l'une des revendications 1 ou 2 **caractérisé en ce que** les moyens de reconnaissance de commandes tactiles (MRC) de l'interface tactile (29) sont agencés pour déterminer, en plus du déplacement, la position et/ou l'intensité du contact sur l'interface tactile (29) en fonction des données fournies par ledit au moins un capteur de poids (5).

4. Appareil électronique de pesée (1) selon l'une des revendications précédentes où l'interface tactile (29) présente une surface substantiellement allongée pour définir une zone active de déplacement rectiligne d'un contact afin de commander la fonction proportionnellement au déplacement.

5. Appareil électronique de pesée (1) selon l'une des revendications 1 à 3 où l'interface tactile (29) présente une surface permettant de définir une zone active de déplacement curviligne d'un contact afin de commander la fonction.

6. Appareil électronique de pesée (1) selon l'une des revendications précédentes comprenant des moyens de traitement de données (MTA) pour déterminer la vitesse du déplacement de l'appui afin de commander la fonction proportionnellement à ladite vitesse.

7. Appareil électronique de pesée (1) selon l'une des revendications précédentes **caractérisé en ce que** les moyens de reconnaissance de commandes tactiles (MRC) de l'interface tactile (29) sont agencés pour déterminer, en fonction des données fournies par ledit au moins un capteur de poids (5), le déplacement d'un contact sur l'interface tactile afin de commander une fonction et ensuite déterminer l'augmentation d'intensité du contact sur l'interface tactile (29) de l'appui en fin de déplacement afin de valider ladite commande de fonction.

8. Appareil électronique de pesée (1) selon l'une des revendications précédentes, comprenant des moyens de communication de données (MCO) agencés pour transmettre à destination d'un terminal de communication portable (11) des données de commande utilisateur (DC) fournies par l'interface utilisateur de commande (25), et des données de mesure (DM) déterminées en fonction du signal en provenance dudit au moins un capteur de poids (5), et pour recevoir des données de résultat et/ou de commande extérieures en provenance du terminal de communication portable (11).

9. Appareil électronique de pesée (1) selon l'une des revendications précédentes, comprenant un logement (9) situé dans une zone d'action des moyens de communication de données (MCO) de l'appareil électronique de pesée (1).

10. Appareil électronique de pesée (1), selon la revendication précédente, dans lequel une paroi transparente ou translucide (17) délimite une séparation entre le logement (9) et l'extérieur (19), la paroi transparente (17) étant agencée de façon à être disposée en regard de l'écran (23) du terminal de communication portable (11) inséré dans le logement (9), une portion de la paroi transparente (17) étant comprise dans l'interface tactile (29).

11. Procédé de contrôle et/ou de commande d'un appareil électronique de pesée (1) comprenant un plateau de réception (3) d'une charge à peser, au moins un capteur de poids (5) destiné à émettre un signal représentatif de la charge appliquée et d'une position d'application de la charge sur le plateau de réception (3), et une interface utilisateur de commande destinée à recevoir des instructions d'un utilisateur et comprenant une interface tactile (29) formée au moins partiellement sur le plateau,
Comprenant les étapes suivantes :
- recevoir des données de commande utilisateur (DC) par l'intermédiaire de l'interface tactile de l'appareil électronique de pesée issues d'un déplacement d'un contact entre deux points sur la surface de l'interface tactile (29), le déplacement d'un contact entre deux points sur la surface de l'interface tactile (29) étant déterminé en fonction des données fournies par ledit au moins un capteur de poids (5).
- transmettre à destination d'une unité de commande (CPU) les données de commande (DC) utilisateur, et des données de mesure (DM) déterminées en fonction du signal en provenance dudit au moins un capteur de poids (5),
- émettre des données de résultat et/ou de commande (DC) en provenance de l'unité de commande (CPU).

12. Procédé de contrôle et/ou de commande selon la revendication précédente, dans lequel :
- on détermine les données de commande utilisateur (DC) à partir d'au moins un appui sur une surface d'une interface tactile (29) de l'appareil électronique de pesée (1) ;
- on convertit au moins une position de l'appui sur la surface tactile de l'appareil de pesée en une position correspondante d'un écran tactile d'un terminal de communication portable (11) disposé dans un logement (9) de l'appareil de pesée (1), l'écran tactile étant en regard de la surface de l'interface tactile (29).

13. Procédé de contrôle et/ou de commande selon la revendication 12, dans lequel on définit les contours d'une zone active (31) par l'intermédiaire de l'interface tactile (29) de l'appareil de pesée (1), la zone active (31) étant définie comme une portion de la surface de l'interface tactile (29), de préférence transparente ou translucide, étant en regard de la surface de l'écran (23) du terminal (11).

## Patentansprüche

1. Elektronisches Wiegegerät (1), umfassend:
- einer Aufnahmeplatte (3) einer zu wiegenden Last;
- mindestens einen Gewichtssensor (5), der dazu bestimmt ist, mindestens ein Signal auszusenden, das für die auf die Aufnahmeplatte (3) aufgebrachte Last repräsentativ ist, und
- eine Benutzersteuerschnittstelle (25), die dazu bestimmt ist, Anweisungen von einem Benutzer zu empfangen,
**dadurch gekennzeichnet, dass**
die Benutzersteuerschnittstelle (25) eine Berührungsschnittstelle (29) umfasst, die Mittel zur Erkennung von Berührungsbefehlen (MRC) umfasst, die eingerichtet sind, um mindestens eine Verschiebung eines Kontakts zwischen zwei Punkten auf der Oberfläche der Berührungsschnittstelle (29) zu bestimmen, um eine Funktion des Geräts zu steuern, und dass der mindestens eine Gewichtssensor (5) dazu bestimmt ist, mindestens ein Signal auszusenden, das für die aufgebrachte Last und eine Position zum Aufbringen der Last auf der Aufnahmeplatte (3) repräsentativ ist, und dass die Mittel zur Erkennung von Berührungsbefehlen (MRC) in der Lage sind, zumindest die Verschiebung des Kontakts zwischen den zwei Punkten auf der Oberfläche der Berührungsschnittstelle als Funktion der Daten zu bestimmen, die durch den mindestens einen Gewichtssensor (5) bereitgestellt werden.

2. Elektronisches Wiegegerät (1) nach Anspruch 1, wobei die Mittel zur Erkennung von Berührungsbefehlen (MRC) umfassen:
- Mittel zur Erkennung einer punktuellen Auflage auf der Oberfläche der Berührungsschnittstelle (29), und
- Mittel zur Erkennung einer Auflage , die zwischen zwei Punkten der Oberfläche der Berührungsschnittstelle (29) verschoben wird.

3. Elektronisches Wiegegerät (1) nach einem der Ansprüche 1 oder 2, **dadurch gekennzeichnet, dass** die Mittel zur Erkennung von Berührungsbefehlen (MRC) der Berührungsschnittstelle (29) eingerichtet sind, um zusätzlich zu der Verschiebung die Position und/oder die Intensität des Kontakts auf der Berührungsschnittstelle (29) als Funktion der Daten zu bestimmen, die von dem mindestens einen Gewichtssensor (5) bereitgestellt werden.

4. Elektronisches Wiegegerät (1) nach einem der vorhergehenden Ansprüche, wobei die Berührungsschnittstelle (29) eine im Wesentlichen längliche Oberfläche aufweist, um einen aktiven Bereich einer geradlinigen Verschiebung eines Kontakts zu definieren, um die Funktion proportional zu der Verschiebung zu steuern.

5. Elektronisches Wiegegerät (1) nach einem der Ansprüche 1 bis 3, wobei die Berührungsschnittstelle (29) eine Oberfläche aufweist, die es ermöglicht, einen aktiven Bereich zur krummlinigen Verschiebung eines Kontakts zum Steuern der Funktion zu definieren.

6. Elektronisches Wiegegerät (1) nach einem der vorhergehenden Ansprüche, umfassend Mittel zur Datenverarbeitung (MTA), um die Verschiebungsgeschwindigkeit der Auflage zu bestimmen, um die Funktion proportional zu der Geschwindigkeit zu steuern.

7. Elektronisches Wiegegerät (1) nach einem der vorhergehenden Ansprüche, **dadurch gekennzeichnet, dass** die Mittel zur Erkennung der Berührungsbefehle (MRC) der Berührungsschnittstelle (29) dazu eingerichtet sind, als Funktion von den Daten, die von dem mindestens einen Gewichtssensor (5) bereitgestellt werden, die Verschiebung eines Kontakts auf der Berührungsschnittstelle zu bestimmen, um eine Funktion zu steuern, und dann die Zunahme der Intensität des Kontakts auf der Berührungsoberfläche (29) der Auflage am Ende der Verschiebung zu bestimmen, um den Funktionsbefehl zu bestätigen.

8. Elektronisches Wiegegerät (1) nach einem der vorhergehenden Ansprüche, umfassend Mittel zur Datenkommunikation (MCO), die eingerichtet sind, um Benutzersteuerdaten (DC), die von der Benutzersteuerschnittstelle (25) bereitgestellt werden, an ein tragbares Kommunikationsendgerät (11) zu übertragen und Messdaten (DM), die als Funktion des Signals von dem mindestens einen Gewichtssensor (5) bestimmt werden, und externe Ergebnis- und/oder Steuerdaten von dem tragbaren Kommunikationsendgerät (11) zu empfangen.

9. Elektronisches Wiegegerät (1) nach einem der vorhergehenden Ansprüche, umfassend eine Aufnahme (9), die sich in einem Wirkbereich der Datenkommunikationsmittel (MCO) des elektronischen Wiegegeräts (1) befindet.

10. Elektronisches Wiegegerät (1) nach dem vorhergehenden Anspruch, wobei eine transparente oder transluzente Wand (17) eine Trennung zwischen der Aufnahme (9) und der Außenseite (19) begrenzt, wobei die transparente Wand (17) derart eingerichtet ist, dass sie gegenüber dem Bildschirm (23) des tragbaren Kommunikationsendgeräts (11) angeordnet ist, das in die Aufnahme (9) eingesetzt ist, wobei ein Teil der transparenten Wand (17) in der Berührungsschnittstelle (29) enthalten ist.

11. Verfahren zur Kontrolle und/oder Steuerung eines elektronischen Wiegegeräts (1), umfassend eine Aufnahmeplatte (3) einer zu wiegenden Last, mindestens einen Gewichtssensor (5), der dazu bestimmt ist, ein Signal auszusenden, das für die aufgebrachte Last und eine Position zur Aufbringung der Last auf der Aufnahmeplatte (3) repräsentativ ist, und eine Benutzersteuerschnittstelle, die dazu bestimmt ist, Anweisungen von einem Benutzer zu empfangen und eine Berührungsschnittstelle (29) umfasst, die zumindest teilweise auf der Platte gebildet ist, wobei es die folgenden Schritte umfasst:
- Empfangen von Benutzersteuerungsdaten (DC) über die Berührungsschnittstelle (29) des elektronischen Wiegegeräts, die sich aus einer Verschiebung eines Kontakts zwischen zwei Punkten auf der Oberfläche der Berührungsschnittstelle (29) ergeben, die als Funktion der Daten bestimmt wird, die durch einen Gewichtssensor (5) bereitgestellt werden;
- Übertragen der Benutzersteuerdaten (DC) und Messdaten (DM), die als Funktion von dem von dem mindestens einen Gewichtssensor (5) kommenden Signal bestimmt werden, an eine Steuereinheit (CPU),
- Aussenden der Ergebnis- und/oder Steuerdaten (DC) von der Steuereinheit (CPU).

12. Verfahren zur Kontrolle und/oder Steuerung nach dem vorhergehenden Anspruch, wobei:
- die Benutzersteuerdaten (DC) von mindestens einer Auflage auf einer Oberfläche einer Berührungsschnittstelle (29) des elektronischen Wiegegeräts (1) bestimmt werden;
- mindestens eine Position der Auflage auf der Berührungsfläche des Wiegegeräts in eine entsprechende Position eines Berührungsbildschirms eines tragbaren Kommunikationsendgeräts (11) umgewandelt wird, das in einer Aufnahme (9) des Wiegegeräts (1) angeordnet ist, wobei der Berührungsbildschirm der Oberfläche der Berührungsschnittstelle (29) zugewandt ist.

13. Verfahren zur Kontrolle und/oder Steuerung nach Anspruch 12, wobei die Konturen einer aktiven Zone (31) mittels der Berührungsschnittstelle (29) des Wiegegeräts (1) definiert werden, wobei die aktive Zone (31) als ein Abschnitt der Oberfläche der Berührungsschnittstelle (29) definiert ist, der vorzugsweise transparent oder durchscheinend ist, und der Oberfläche des Bildschirms (23) des Endgeräts (11) zugewandt ist.

## Claims

1. Electronic weighing device (1) comprising:
- a reception tray (3) to hold a load to be weighed,
- at least one weight sensor (5) designed to output at least one signal representative of the load applied on the reception tray (3), and
- a user control interface (25) designed to receive instructions from a user,
**characterised in that**
the user control interface (25) comprises a touch interface (29) comprising means of recognition of touch commands (MRC) arranged to determine at least one displacement of a contact between two points on the surface of the touch interface (29) so as to control a function of the apparatus, and **in that** said at least one weight sensor (5) is designed to output at least one signal representative of the applied load and of the load application position on the reception tray (3), and **in that** the touch command recognition means (MRC) are capable of determining at least the displacement of the contact between the two points on the surface of the touch interface as a function of data supplied by said at least one weight sensor (5).

2. Electronic weighing device (1) according to claim 1 wherein the touch command recognition means (MRC) comprise:
- recognition means of a point press on the surface of the touch interface (29), and
- recognition means of a press displacing between two points on the surface of the touch interface (29).

3. Electronic weighing device (1) according to claim 1 or 2 **characterised in that** the touch command recognition means (MRC) of the touch interface (29) are arranged to determine the position and/or intensity of the contact on the touch interface (29) as a function of data output by said at least one weight sensor (5), in addition to the displacement.

4. Electronic weighing device (1) according to one of the preceding claims where the touch interface (29) has a substantially elongated surface to define an active zone of straight displacement of a contact in order to control the function proportionally to the displacement.

5. Electronic weighing device (1) according to one of claims 1 to 3 where the touch interface (29) has a surface on which an active zone of curved displacement of a contact can be defined in order to control the function.

6. Electronic weighing device (1) according to one of the preceding claims comprising data processing means (MTA) to determine the displacement velocity of the press so as to control the function proportionally to said velocity.

7. Electronic weighing device (1) according to one of the preceding claims **characterised in that** the touch command recognition means (MRC) of the touch interface (29) are arranged to determine the displacement of a contact on the touch interface as a function of data output by said at least one weight sensor (5), to command a function and then determine the increase in the contact intensity on the touch interface (29) of the press at the end of the displacement so as to validate said function command.

8. Electronic weighing device (1) according to one of the preceding claims, comprising data communication means (MCO) arranged to transmit user command data (DC) output by the user command interface (25) and measurement data (DM) determined as a function of the signal output from said at least one weight sensor (5) to a portable communication terminal (11), and to receive result data and/or external command data from the portable communication terminal (11).

9. Electronic weighing device (1) according to one of the preceding claims, comprising a housing (9) located in an action zone of the data communication means (MCO) of the electronic weighing device (1).

10. Electronic weighing device (1) according to the preceding claim, wherein a transparent or translucent wall (17) delimits a separation between the housing (9) and the exterior (19), the transparent wall (17) being arranged facing the screen (23) of the portable communication terminal (11) inserted in the housing (9), a portion of the transparent wall (17) being located in the touch interface (29).

11. Control and/or command method for an electronic weighing device (1) comprising a reception tray (3) for a load to be weighed, at least one weight sensor (5) that will output a signal representative of the applied load and position at which the load is applied on the reception tray (3), and a user command interface that will receive instructions from a user and including a touch interface (29) formed at least partially on the tray,
Comprising the following steps:
- receive user command data (DC) through the touch interface of the electronic weighing device produced by displacement of a contact between two points on the surface of the touch interface (29), the displacement of a contact between two points on the surface of the touch interface (29) being determined as a function of data output by said at least one weight sensor (5).
- transmit user command data (DC) and measurement data (DM) determined as a function of the signal from said at least one weight sensor (5), to a command unit (CPU),
- send result data and/or command data (DC) from the command unit (CPU).

12. Control and/or command method according to the previous claim, wherein:
- user command data (DC) are determined from at least one press on a surface of a touch interface (29) of the electronic weighing device (1);
- at least one press position on the touch surface of the weighing apparatus is converted into a corresponding position on a touch screen of a portable communication terminal (11) located in a housing (9) of the weighing instrument (1), the touch screen being located facing the surface of the touch interface (29).

13. Control and/or command method according to claim 12, wherein contours of an active zone (31) are defined making use of the touch interface (29) of the weighting instrument (1), the active zone (31) being defined as being a portion of the surface of the touch interface (29), preferably transparent or translucent, facing the surface of the screen (23) of the terminal (11).
